# EUROPÄISCHE PATENTANMELDUNG

(11) **EP 0 862 306 A2**
(43) Veröffentlichungstag der Anmeldung: **02.09.1998**
(21) Anmeldenummer: 98102881.4
(22) Anmeldetag: 19.02.1998
(51) Int. Cl.: H04M 1/00, H04Q 1/48

(54) **Vorrichtung zur kontaktlosen Übertragung von DTMF-Signalen**

(30) Priorität: 20.02.1997 CZ 52797
(71) Anmelder: Stovicek, Pavel, 301 42 Plzen (CZ); Zizka, Jaroslav, 330 11 Tremosna (CZ)
(72) Erfinder: Stovicek, Pavel, 301 42 Plzen (CZ); Zizka, Jaroslav, 330 11 Tremosna (CZ)
(74) Vertreter: Jeck, Anton, Dipl.-Ing.

(57) **Zusammenfassung**

Die Erfindung betrifft eine Vorrichtung zur kontaklosen Übertragung von DTMF-Signalen mit einer Standardtastatur (1) zur Wahl von DTMF sowie mit einem eingebauten und vorzugsweise dynamischen Lautsprecher (2), wobei im Empfangsschaltkreis der Vorrichtung ein Dekoder (7) von DTMF-Signalen liegt und am Eingang sind ein Kondensator (5) sowie ein Widerstand (6) angeschlossen, während ein Ende (6) des Empfangskreises der DTMF-Wahl mit einer gemeinsamen Erde (4) verbunden ist.

## Beschreibung

Die Erfindung betrifft eine Vorrichtung nach dem Oberbegriff des Anspruches 1.

Unter DTMF ist ein Signalübertragungsverfahren zu verstehen, das Doppelton-Mehrfrequenz-Signale verwendet. DTMF-Wähler werden ausschließlich zur Bedienung von Telekommunikations- oder Rundfunkeinrichtungen verwendet. Der Sender des DTMF-Wahl ist entweder im Telefonapparat, in dem nach Betätigung der Tastatur die entsprechende Frequenz moduliert wird, oder in einer Übertragungseinrichtung (Steuerung) eingesetzt. Die modulierte Frequenz wird hierbei in die Telefonzentrale übertragen, wo sie ausgewertet wird. Diese Mehr-Frequenz-Wahl wird in Telekommunikationseinrichtungen mit digitalen Zentralen genutzt. In anderen Fällen kann der Telefonapparat oder der Radioempfänger mit der übertragbaren Tastatur der DTMF-Signale gesteuert werden, die in der Nähe des Mikrofons des Telefon- oder Radiohörers positioniert wird. Nach Betätigung der Tastatur der übertragbaren Bedienung wird eine vom eingebauten Lautsprecher modulierte Frequenz gesendet. Diese Frequenz wird auf bekannte Übertragungsweise akustisch über das Mikrofon der Telefon- oder Radioeinrichtung an die Empfängerseite der Telefon- oder Rundfunkeinrichtung übertragen. Diese empfangenen Signale werden sodann in diesen DTMF-Empfängern ausgewertet und weiter verarbeitet.

Die Übertragung der DTMF-Wahl-Signale ist daher aus der direkten Durchschaltung bei Telefon- oder Radioeinrichtungen bekannt, nämlich DTMF-Sender / DTMF-Empfänger oder übertragbare Tastatur der DTMF-Wahl / DTMF-Signale, die aus dem Lautsprecher der tragbaren Tastatur wird akustisch übertragen über das Mikrofon der ersten Einrichtung zur weiteren Verarbeitung auf der anderen Seite des Übertragungswegs mit einer Einrichtung mit einem Empfänger von DTMF-Signalen. Als nachteilig wird bei den bekannten Einrichtungen die akustische Übertragung empfunden, die nicht durch starre, feste Werkstoffe sowie in geräuschvoller Umgebung durchgeführt werden kann.

Ausgehend von dem obigen Stand der Technik liegt der Erfindung die Aufgabe zugrunde, hier Abhilfe zu schaffen.

Die gestellte Aufgabe wird erfindungsgemäß durch die Merkmale des Anspruches 1 gelöst.

Man erkennt, daß die Erfindung jedenfalls dann verwirklicht ist, wenn die Induktionsspule direkt am Eingang der Empfangsschaltung der DTMF-Wahl angeschlossen ist, wobei das andere Ende der Induktionsspule an die gemeinsame Erde der Empfangschaltung der DTMF angeschlossen ist.

Ein wichtiger Vorteil der vorgeschlagenen Maßnahme besteht darin, daß die Übertragung der Informationen bei Verwendung von elektromagnetisch nicht leitenden Werkstoffen nicht gestört wird. Die Übertragung der Informationen in geräuschvoller Umgebung erfolgt ebenfalls problemlos. Ferner ist von Bedeutung, daß die transportable Tastatur der DTMF-Wahl auch in anderen Bereichen, z.B. zur Steuerung und Einstellung von gewerblichen Sicherheitseinrichtungen, verwendbar ist.

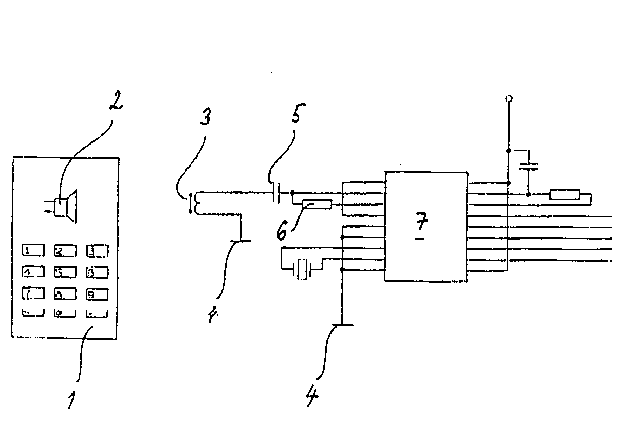

Ein Ausführungsbeispiel der Erfindung ist in der Zeichnung schematisch dargestellt und wird im folgenden näher erläutert. Die Zeichnung zeigt eine übertragbare Tastatur mit einem dynamischen Lautsprecher sowie einer Schaltung für induktive Übertragung von DTMF-Signalen.

Die in der Zeichnung dargestellte Vorrichtung ist für Kraftfahrzeuge vorgesehen und dient zur kontaktlosen Übertragung von DTMF-Signalen. Hierbei wird eine herkömmliche und transportable Tastatur 1 mit eingebautem dynamischen Lautsprecher 2 zur Wahl von DTMF-Signalen verwendet. Im Empfangsschaltkreis der DTMF-Wahl liegt ein Dekoder 7 von DTMF-Signalen, Typ MT 8870, und im Eingangsschaltkreises liegt ein Kondensator 5 mit 100 nF sowie ein Widerstand 6 mit 220 kΩ. Ein Ende des Schaltkreises der DTMF-Wahl ist mit der gemeinsamen Erde 4 verbunden. Direkt am Eingang des Empfangsschaltkreises der DTMF-Wahl liegt eine Induktionsspule 3 mit 80 mH, wobei das andere Ende dieser Induktionsspule 3 mit der gemeinsamen Erde 4 des Schaltkreises DTMF angeschlossen ist. Die Einrichtung funktioniert wie folgt: Mit Hilfe einer üblichen und tragbaren Tastatur 1 wird die Sicherheitseinrichtung eines Kraftfahrzeuges gesteuert und beherrscht. Darunter ist die Sicherstellung und das Entsichern des Kraftfahrzeuges, Einstellung der Parameter der Sicherungseinrichtung, einschließlich der Zahlenkombination, zu verstehen. Die Einrichtung gemäß der Erfindung, einschließlich der Induktionsspule 3, ist unter der Windschutzscheibe angeordnet. Durch die Positionierung der Standardtastatur 1 oberhalb der Induktionsspule 3 und durch die Wahl einer entsprechenden Zahlenkombination wird das Sicherheitssystem des Kraftfahrzeuges ge- bzw. entsichert. Auf diese Weise wird ein unbefugtes Betätigen des Steuerungssystems verhindert.

Dadurch, daß die übertragbare Standardtastatur mobil ist, kann es auch nicht zur Entwendung des Zahlencodes selbst dann nicht kommen, wenn die üblichen Zahlenkombinationen dem System entnommen werden könnte.

Die erfindungsgemäße Schaltung kann zur Steuerung oder Betätigung von Sicherheitseinrichtungen und zur kodierten Steuerung von Geräten dienen.

Es ist so Unbefugten verwehrt, in die Steuerung dieser Geräte, beispielsweise von Türschlössern, Kraftfahrzeugen, elektrischen Haushaltsgeräten oder Fertigungsanlagen, einzugreifen. Nur derjenige, der die tragbare Tastatur in die Nähe der dem Gerät zugeordneten Empfangsschaltung bringt, kann die Steuerung des Gerätes veranlassen. Dabei kann dem Benutzer ein Geheimcode zugeordnet sein, nach dessen Eingabe mit der Tastatur die Steuerung des Geräts erst freigegeben wird.

## Patentansprüche

1. Vorrichtung zur kontaklosen Übertragung von DTMF-Signalen mit einer Standardtastatur (1) zur Wahl von DTMF sowie mit einem eingebauten und vorzugsweise dynamischen Lautsprecher (2), wobei im Empfangsschaltkreis der Vorrichtung ein Dekoder (7) von DTMF-Signalen liegt und
am Eingang einen Kondensator (5) sowie einen Widerstand (6) angeschlossen sind, während ein Ende (6) des Empfangsschaltkreises der DTMF-Wahl mit einer gemeinsamen Erde (4) verbunden ist,
dadurch gekennzeichnet,
daß am Eingang des Empfangsschaltkreises der DTMF-Wahl eine Induktionsspule (3) liegt, wobei das andere Ende der Induktionsspule (3) mit der gemeinsamen Erde (4) der Empfangsschaltung verbunden ist.
